# EUROPEAN PATENT APPLICATION

(11) **EP 1 079 296 A2**
(43) Date of publication of application: **28.02.2001**
(21) Application number: 00306258.5
(22) Date of filing: 24.07.2000
(51) Int. Cl.: G06F 1/16, H01Q 1/22

(54) **Electronically steerable embedded laptop computer antenna array**

(30) Priority: 06.08.1999 US 370336
(71) Applicant: LUCENT TECHNOLOGIES INC., Murray Hill, New Jersey 07974-0636 (US)
(72) Inventor: Honcharenko, Walter, Monmouth Junction, NJ 08852 (US)
(74) Representative: Buckley, Christopher Simon Thirsk

(57) **Abstract**

An electronically steerable patch antenna array (10) is formed on the back of a laptop computer display (30) and used for wireless communications. The array can be formed directly on the surface or a sublayer of the display panel or can be formed on a separate substrate which is then attached to the unit. Beamforming circuitry can be used to detect the location of an external wireless transmission and focus the antenna beam in the detected direction to allow for increased transmission bandwidth and a higher signal-to-noise ratio for received signals.

## Description

### Field Of The Invention

This invention is related to an antenna for wireless electronic data communication. More particularly, this invention is related to an electronically steered antenna for use with a laptop computer.

### Background Of The Invention

It is becoming increasingly common to incorporate wireless communication devices into laptop, handheld, or other portable computers. To use such wireless devices, a wireless environment can be configured to include data transceivers placed at various locations in a building or geographic area. Individual computers are equipped with appropriate transceivers and antennas so that the computer can be connected to the network over a wireless link at various places within the building or area and moved about without the need to repeatedly disconnect and reconnect network cables, modems, and the like.

In order to compete with hard-wired connections, a wireless data link must support a high data rate. The link must also exhibit a large signal-to-noise ratio to permit accurate data transmission. These needs must be balanced with the consideration that portable wireless devices generally have only limited power available for transmitting data. One method of reducing the power requirements and noise susceptibility of wireless communications is to use a transceiver with a narrow-beam directional antenna. Interference from sources outside the beam is screened out, thus increasing the overall signal-to-noise ratio and permitting the use of a lower powered transmission. A drawback to this arrangement is that the antenna must be directed properly to a system transceiver. This often requires the operator of the wireless computer to orient the computer relative to a transmission source with a relatively high degree of accuracy.

An alternative arrangement utilizes a unidirectional antenna structure. For example, U.S. Patent No. 5,684,672 to Kardis et al. discloses a laptop computer including a telescoping rod antenna mounted along the side of the display. The use of the unidirectional antenna eliminates the need to orient the antenna with respect to a particular system transceiver. However, the antenna is susceptible to noise from all directions, thus reducing the signal-to-noise ratio of incoming signals for a given system transmission power. In addition, since power is radiated in all directions, the power required to achieve a given signal power level at a set distance from the computer is greater than that required by a directional antenna.

A further drawback associated with telescoping or otherwise extendable antenna, is that the antenna can be damaged easily when extended or removed from the laptop, at a minimum reducing its efficiency, and, in the worst case, damaging it beyond repair. This problem also exists for antennas which must be attached separately to the computer.

### Summary Of The Invention

According to the invention, an antenna array is embedded in or otherwise formed on an appropriate surface of a wireless device, such as the back of a flat-panel display in a laptop computer. The antenna array comprises multiple antenna elements arranged in a suitable configuration, generally a rectangular grid. The array can be formed directly on or within the display device, by printing or other metal deposition techniques, or can be formed on a separate substrate which is then attached to the unit.

In a preferred arrangement, the antenna is formed on a printed circuit board ("PCB") which is embedded between the outer plastic cover of the laptop screen and an electrical reflector. The reflector both increases the efficiency of the antenna and also minimizes the RF interference to protect the radio and computer portion of the system from electromagnetic radiation. Alternatively, the PCB antenna can be formed separately and attached to the back of the display by the user, e.g., with adhesive.

In a most preferred embodiment, at least some of the antenna elements have separate feeds so that the elements are individually controllable. This permits the output beam to be electronically "steered" and allows the antenna reception to be adjusted to improve the signal-to-noise ratio. Such an antenna can be driven by a beamforming matrix and associated beamforming processor which measures the phases and amplitude of signals received by each antenna element to determine the direction from which the transmission originated. The system also controls the phases and amplitudes of signals transmitted by the antenna elements to adjust the direction and width of the overall beam as needed. For example, after a laptop has been positioned and roughly directed towards a transmission source, a wide beam can be used to acquire and generally locate a system transceiver. Once the transceiver has been located, a narrow beam can be used to allow for greater power efficiency, a higher signal-to-noise ratio, and a concurrently greater data transmission rate.

### Brief Description Of The Drawings

The foregoing and other features of the present invention will be understood more readily from the following detailed description and drawings of illustrated embodiments of the invention in which:
Fig. 1 is a perspective view of a laptop computer including an antenna array according to the invention;
Fig. 2 is a plan view of an electronically steerable antenna array for use in an embodiment of the invention;
Fig. 3 is a cross-sectional view of an antenna integrated with a flat panel display according to one embodiment of the invention;
Fig. 4 is a cross-sectional view of an antenna according to a second embodiment of the invention which is suitable for integration with an existing flat panel display; and
Fig. 5 is a high level diagram of a steerable antenna array according to the invention and associated system for driving the antenna.

### Detailed Description Of The Preferred Embodiments

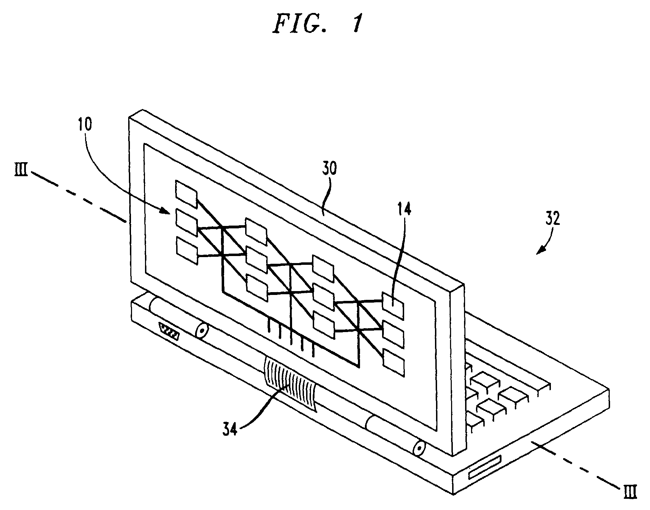

Turning to Fig. 1, there is shown a planar antenna array 10 embedded in or otherwise formed on, attached to, or integrated within a wireless computing device 32, such as a laptop computer. The antenna array comprises multiple antenna elements 14 which are arranged in a suitable configuration, generally a rectangular grid. The number, size, and arrangement of the antenna elements 14 of antenna 10 depend on the desired performance characteristics of the antenna array, such as its frequency of operation, beam adjustability, etc.

The antenna array 10 is integrated with a suitable surface of a computer 32, such as the back surface of the display portion 30. The array can be formed directly on the surface by printing or other metal deposition techniques, or can be formed on a separate substrate, such as a printed circuit board ("PCB") or plastic dielectric sheet, which is then attached to the unit. The antenna can also be formed as a sub-layer within the display. Various fabrication techniques will be known to those of skill in the art.

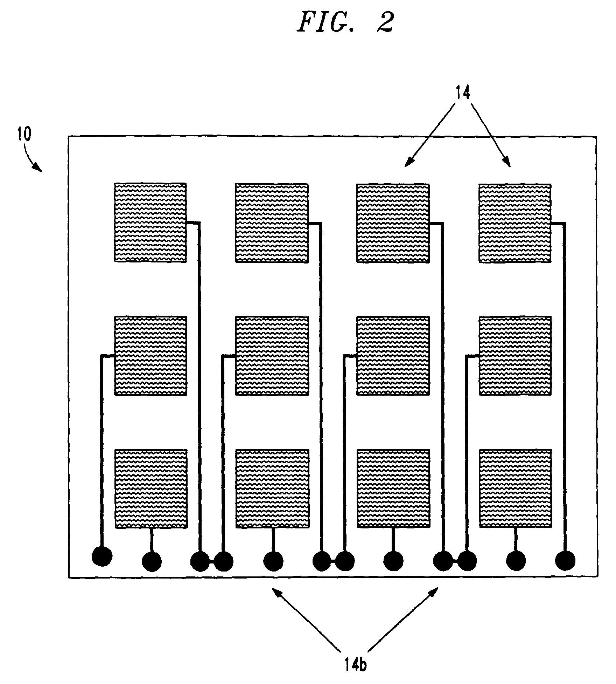

In the preferred antenna array embodiment, shown in Fig. 2, at least some of the antenna elements 14 have independent antenna feeds 14b. The use of independent feeds 14b permits the input and output for the elements to be independently controlled. By properly controlling the magnitude and phase of the signals applied to each of the independent feeds using techniques known to those of skill in the art, the direction of an output beam can be "steered" and the input signal-to-noise ratio increased. The beamforming circuitry, discussed in more detail below, is preferably embedded in the computer 32, either during manufacturing or on a peripheral card, and the antenna 10 is connected to the processor 22 by means of an appropriate cable 34. While Fig. 2 shows an antenna array 10 where each element 14 has its own independent feed 14b, the feeds 14b of several elements 14 can be connected together to reduce the number of antenna elements which are separably controllable, and thus the complexity of the antenna driving hardware and software.

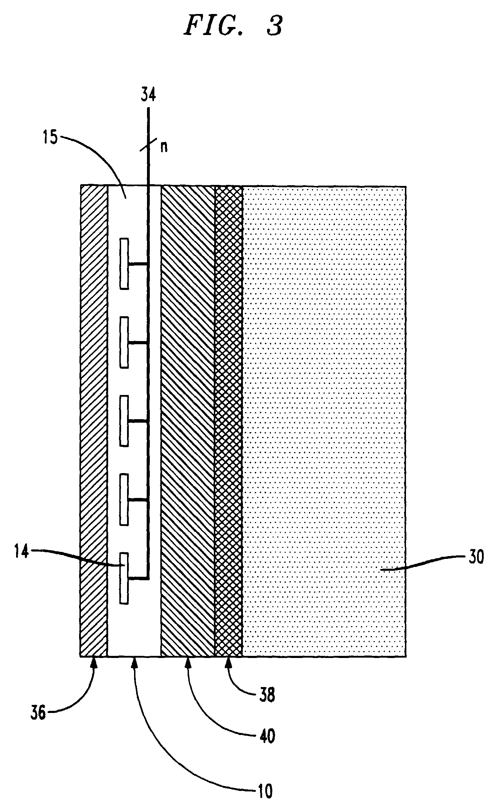

Fig. 3 is a horizontal cross-section of one embodiment of the display 30 in Fig. 1 taken along line III-III in Fig. 1. The antenna 10 is formed on a PCB substrate 15 which is attached to the back of the flat panel display 30. An outer cover 36 can also be provided to protect the antenna, although one is not necessary for the invention to operate.

Also shown in Fig. 3 is a reflector 38 situated between the antenna substrate 15 and the display 30. The reflector 38 both increases the efficiency of the antenna and also minimizes the RF interference to protect the radio and computer portion of the system from electromagnetic radiation from the antenna. A dielectric spacer 40 can be inserted between the reflector 38 and the antenna substrate 15 to increase the output efficiency of the antenna. The optimal thickness of the dielectric spacer 40 depends on the configuration of the antenna and factors to consider in selecting an appropriate thickness are known to those skilled in the art of antenna design. The various layers can be attached to each other and the display 30 by any appropriate mechanism. For example, the layers can be bolted, screwed, or otherwise fastened together and to the back of the display 30. Alternatively adhesives can be used.

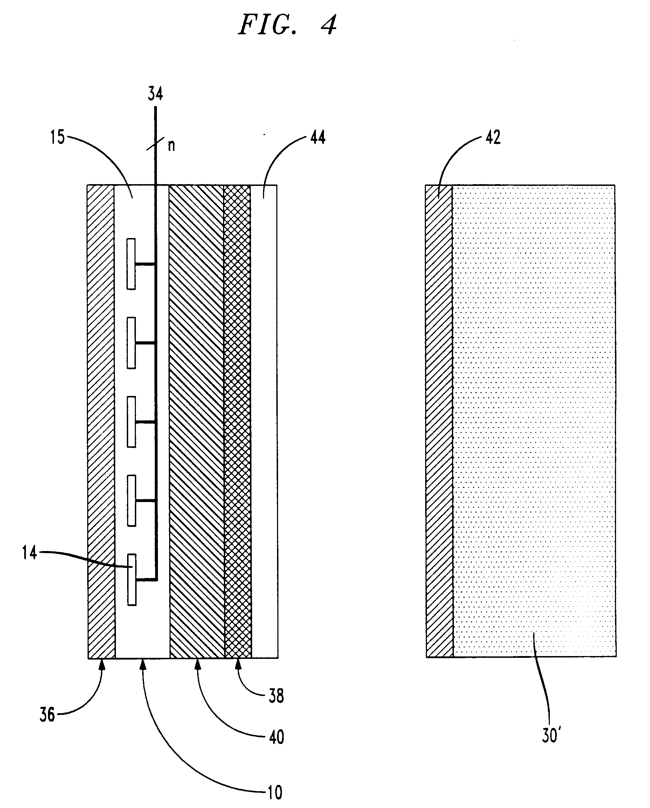

According to an alternative embodiment of the invention, illustrated in cross-section in Fig. 4, an antenna array 10 is configured to be attachable to an appropriate surface on a wireless electronic device, such as the back of a existing flat panel display 30' in a laptop computer. Preferably, a layered antenna structure is used and includes an adhesive layer 44 which will adhere to the outer cover 42 of the display 30' when the antenna is mounted. However, a wide variety of other attachment mechanisms for mounting the antenna on an appropriate surface can be used. Such other mechanisms include screws, clips, snaps, locking pins, straps, hook-and-loop material, suction cups, and the like.

Advantageously, this arrangement allows an antenna array to be affixed to a preexisting laptop computer in a manner which eliminates the need to transport separable components and also minimizes the likelihood that the antenna will be damaged. The antenna 10 is connected to appropriate circuitry in the computer or an interface card by means of a cable 34.

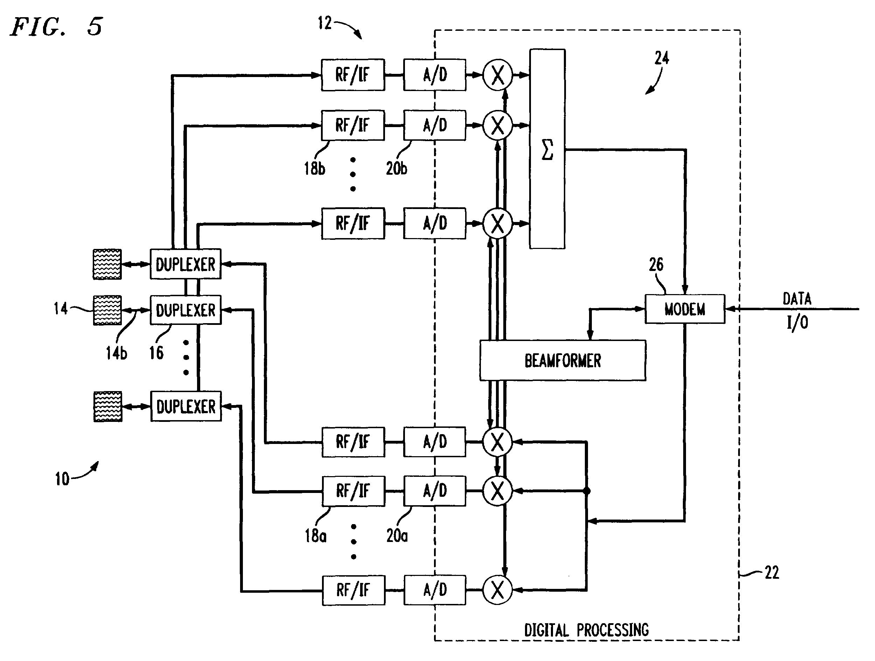

As discussed above, when the antenna array 10 has elements 14 with independent feeds 14b, the antenna directivity can be electrically controlled by appropriate interface and beamforming circuitry. Various beamforming circuit configurations for adjusting the beam of an antenna array and for analyzing the received signal patterns to determine a signal source are known to those of skill in the art. A block diagram of such an antenna array 10 with a particular arrangement of driving hardware 12 is illustrated in Fig. 5. The circuitry can be integrated directly into the wireless device 32 or contained in a separate expansion card, such as a PCMCIA card, which is then connected to device 32.

As shown, each antenna element 14 is connected by feed 14b to a respective duplexer 16 which is used to isolate the transmission and reception paths of the transceiver. In the transmission path, RF/IF converters 18a convert baseband frequency signals into the appropriate transmission frequency and provide the converted signal to a particular antenna element via the duplexers 16. In the reception path, received signals output from the duplexer 16 are converted into baseband frequency signals by RF/IF converters 18b. Analog-to-digital converters 20a are used produce appropriate analog output signals. Similarly, analog-to-digital converters 20b sample the received signals from individual antenna elements and provide the sampled values to the digital signal processor 22, including a beamforming matrix and processing unit 24.

The digital signal processor 22 processes the amplitude and phase of the sampled signals and determines the most likely direction from which the transmission originated. In addition to being processed to determine a direction to the source, the signals from the digital processor are also demodulated into data symbols which represent the received data transmission. The symbols are then output to an appropriate computer network interface, e.g., through modem 26, for further processing. Similarly, when data is transmitted from the computer via modem 26, the base digital signal is processed by the digital processor 22. The signal is then applied to each of the antenna elements 14 with appropriate phase and amplitude variations to focus the beam in the determined direction of the system transceiver. Adaptive algorithms which perform these beamforming functions are well known and various beam steering arrangements and algorithms, such as a minimum mean squared algorithm, can be used. More detailed information about beam steering techniques can be found in John Litva and Titus Kwok-Yeung Lo, "*Digital Beamforming in Wireless Communications*," Artech House, 1996.

In a particular implementation, the beam is initially configured to be very wide so that precise positioning of the wireless device is not required to establish communications. Alternatively, a narrow beam may be "swept" across its range until contact is made with the system transceiver. Once the direction to the system transceiver is determined, the antenna is adjusted to focus on that point, decreasing interference and allowing a faster rate of data communication and/or reduced transmission power.

While the invention has been particularly shown and described with reference to preferred embodiments thereof, it will be understood by those skilled in the art that various changes in the form and details may be made therein without departing from the spirit and scope of the invention.

## Claims

1. A portable computer comprising:
a transceiver; and
an antenna integrated with the computer, said antenna in electrical communication with the transceiver and including a plurality of antenna elements each having a respective antenna element feed.

2. The computer of claim 1, wherein said portable computer has a substantially flat surface, said antenna being affixed to said at least one substantially flat surface.

3. The computer of claim 1, wherein at least two of said antenna element feeds are independent.

4. A computer display for use in a wireless computing environment comprising:
a flat-panel display having a front viewing surface and a rear surface; and
an antenna integrated into the flat-panel display.

5. The computer display of claim 4, wherein said array is embedded in the rear surface of the flat-panel display.

6. The computer display of claim 4, wherein said antenna array comprises a plurality of antenna elements each having a respective antenna element feed, at least two of said feeds being independent.

7. The computer display of claim 4, wherein said antenna array is formed on a dielectric substrate and said substrate is affixed to the rear surface of the flat-panel display.

8. The computer display of claim 7, wherein said substrate is a printed circuit board.

9. The computer display of claim 8, further comprising an electromagnetic reflector situated between the substrate and the viewing surface of the flat-panel display.

10. The computer display of claim 9, further comprising a dielectric spacer situated between the reflector and the substrate.

11. An antenna for use with a portable computer having a flat panel display, the antenna comprising:
a plurality of antenna elements formed on a generally planar substrate, each antenna element having a respective antenna element feed; and
said substrate being attached to a back surface of said display when said antenna is mounted on said portable computer.

12. The antenna of claim 11, wherein at least two of said antenna element feeds are independent.

13. The antenna of claim 11, further comprising an adhesive layer attached to a surface of said substrate and the back surface of the display.

14. The antenna of claim 13, further comprising an electromagnetic reflector situated between the adhesive layer and the substrate.

15. The antenna of claim 14, further comprising a dielectric spacer situated between the electromagnetic reflector and the substrate.

16. The antenna of claim 11, further comprising one of one of screws, clips, snaps, locking pins, straps, hook-and-loop material, and suction cups retaining said substrate to the display.
